# FASCICULE DE BREVET EUROPEEN

(11) **EP 2 150 439 B1**
(45) Date de publication et mention de la délivrance du brevet: **14.10.2015**
(21) Numéro de dépôt: 08805857.3
(22) Date de dépôt: 27.05.2008
(51) Int. Cl.: B60R 13/06, B60J 10/02

(54) **VÉHICULE COMPRENANT UN JOINT DE PLANCHE DE BORD**
FAHRZEUG MIT ARMATURENBRETTABDICHTUNG
VEHICLE WITH A DASHBOARD SEAL

(30) Priorité: 04.06.2007 FR 0755435
(43) Date de publication de la demande: 10.02.2010
(73) Titulaire: Peugeot Citroën Automobiles SA, 78140 Vélizy-Villacoublay (FR)
(72) Inventeur: BARRE, Philippe, F-94340 Joinville Le Pont (FR); MATUSIK, Jacques, F-78180 Montigny Le Bretonneux (FR)
(74) Mandataire: Vigand, Régis Louis Michel
(86) Numéro de dépôt international: PCT/FR2008/050913
(87) Numéro de publication internationale: WO 2008/152293

(56) Documents cités:
- EP-A- 0 615 875
- DE-A1- 3 909 389
- DE-A1- 10 035 958
- DE-A1- 19 705 683
- FR-A- 2 872 098
- JP-A- 2001 151 035
- US-A- 5 634 644
- US-A1- 2002 152 686
- US-A1- 2002 152 687
- US-A1- 2007 029 130
- GRAF DICHTUNGEN: "Restauriermaterial für Oldtimer" 1 janvier 2007 (2007-01-01), GRAF DICHTUNGEN, FIDICINSTR 6, 10965 BERLIN , XP002465164 pages 1-6

## Description

La présente invention concerne un joint de planche de bord d'un véhicule automobile. Plus précisément, l'invention concerne un joint présentant une bonne apparence visuelle et une isolation acoustique entre la planche de bord, le pare-brise et le tablier d'insonorisation du compartiment moteur.

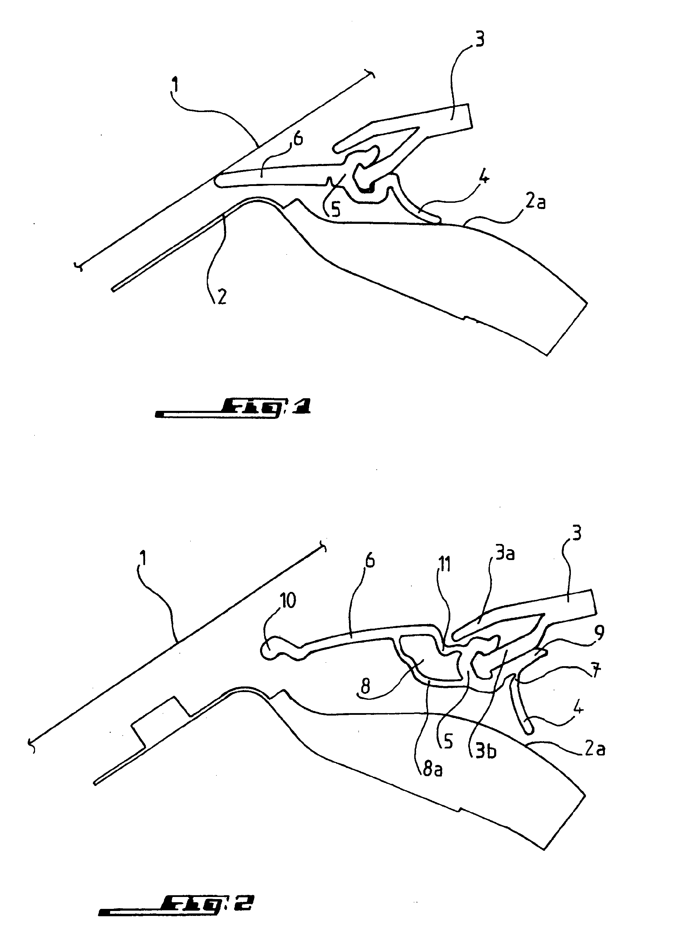

La figure 1 de la présente demande montre une coupe transversale d'un joint de planche de bord selon l'état de la technique. Un tel joint de planche de bord est connu du document FR-A-2 872 098, voir préambule de la revendication 1 de la présente invention, auquel on se reportera pour information ultérieure.

Dans l'habitacle d'un véhicule, un joint de planche de bord est prévu entre un pare-brise 1 séparant l'habitacle de l'extérieur et un tablier 2 d'insonorisation séparant l'habitacle du compartiment moteur du véhicule. Ce joint est d'autre part maintenu par une extrémité de la planche de bord 3 dite nez de planche de bord. Le joint, le pare-brise 1, le tablier 2 et la planche de bord 3 s'étendent sensiblement suivant la direction latérale du véhicule.

Ce joint comprend une pince 5 à laquelle sont liées une lèvre supérieure 6 et une lèvre inférieure 4. La pince 5 présente une forme de C et comprend une mâchoire supérieure et une mâchoire inférieure logeant dans un évidement entre elles le nez de la planche de bord 3, réalisé ici sous la forme d'une extrémité du bras inférieur d'une fourche terminant la planche de bord 3.

La lèvre supérieure 6 s'étend de la pince 5 vers le pare-brise 1 où son extrémité libre peut rentrer en contact avec le bord inférieur de celui-ci. Sous la pression exercée par le pare-brise 1 sur l'extrémité de la lèvre supérieure 6, celle-ci se déforme légèrement pour assurer un contact continu et étanche suivant la direction latérale du véhicule.

La lèvre inférieure 4 s'étend vers le bas à partir de l'extrémité libre de la mâchoire inférieure de la pince 5. Lorsque le joint est mis en place dans l'habitacle du véhicule, cette lèvre inférieure 4 rentre par l'intermédiaire de son extrémité inférieure libre en contact avec une partie 2a du tablier 2. Sous la pression exercée par le tablier 2 sur l'extrémité libre de la lèvre inférieure 4, celle-ci se déforme légèrement pour présenter une forme sensiblement incurvée et assurer un contact continu avec la partie 2a du tablier 2 suivant la direction latérale du véhicule.

Cette solution de joint bi-lèvres appliqué en nez de planche de bord pour traiter l'étanchéité acoustique et la finition entre le pare-brise et la planche de bord ne donne cependant pas entière satisfaction. En fonction des dispersions entre ces deux dernières pièces et du processus de montage selon la succession des étapes de montage avec le pare-brise en premier suivi du montage avec la planche de bord ou inversement, les problèmes suivants apparaissent :
- le joint ne se plaque pas contre le pare-brise ce qui produit une fuite acoustique,
- le joint s'arc-boute sous la planche de bord et ne touche plus le pare-brise ce qui implique une action palliative entraînant un supplément de coût de montage et un risque qualité,
- le joint se plaque trop fort contre le pare-brise et le décolle partiellement,
- le joint s'arc-boute à moitié dans un sens et à moitié dans l'autre ce qui entraîne un défaut visuel et acoustique.

Il est donc nécessaire de développer un nouveau type de joint pour chaque projet véhicule ce qui ne résout que partiellement les problèmes énoncés ci-dessus. Par exemple, dans un cas, il est prévu un joint mousse rapporté sur le pare-brise afin de garantir un contact entre la lèvre supérieure et le joint mousse. On peut aussi tirer sur le joint si celui-ci s'arc-boute lors du montage sur le tablier d'insonorisation afin de le remettre en bonne position. Cependant les problèmes indiqués plus haut ne sont pas éliminés mais seulement atténués.

D'autre part, la demanderesse a constaté, notamment par des essais de simulation numérique, que la lèvre inférieure jouait aussi un rôle dans la création de ces défauts. En effet, un mauvais positionnement de la lèvre inférieure sur le tablier peut entraîner un pivotement de la mâchoire inférieure de la pince et en conséquence faire baisser la lèvre supérieure qui, du coup, ne se plaque plus toujours sur le pare-brise en fonction des dispersions.

Le problème à la base de la présente invention est de garantir une mise en place du joint entre le pare-brise, le tablier d'insonorisation du compartiment moteur et la planche de bord assurant une bonne isolation acoustique de même qu'un bon aspect visuel, cette mise en place étant maintenue dans toutes les conditions de fonctionnement du véhicule.

A cet effet, l'invention a pour objet un véhicule selon la revendication 1.

Avantageusement, la lèvre inférieure présente une diminution d'épaisseur à sa partie supérieure reliée à la pince.

Avantageusement, la lèvre supérieure et la pince sont réalisées en matériau plastique rigide, par exemple en polypropylène et la lèvre inférieure est composée d'un matériau thermoplastique élastomère, par exemple d'éthylène propylène diène monomère.

Avantageusement, la diminution d'épaisseur de la lèvre inférieure se trouve à la liaison de cette lèvre inférieure avec la pince. De préférence, la lèvre inférieure est reliée avec la pince par la mâchoire inférieure de celle-ci, par exemple au début de la surface d'appui présentée par cette mâchoire inférieure.

Avantageusement, le côté supérieur de la lèvre supérieure comprend un sillon destiné à loger en certaines conditions d'opération un élément servant de butée maintenant ainsi une partie de la lèvre supérieure en contact avec le pare-brise.

En position montée du joint et en certaines conditions d'opération, le bras supérieur de la fourche de la planche de bord peut venir en appui sur un endroit, de préférence en forme de sillon, du côté supérieur de la lèvre supérieure, sensiblement au dessus du milieu de la poche fermée.

L'invention va maintenant être décrite plus en détail mais de façon non limitative en regard des figures annexées, dans lesquelles :
- La figure 1 est une coupe transversale du joint de planche de bord conformément à l'état de la technique,
- La figure 2 est une coupe transversale du joint de planche de bord dans une première forme de réalisation selon la présente invention avant son montage entre le tablier et le pare-brise,
- La figure 3 est une coupe transversale du joint de planche de bord dans une première forme de réalisation selon la présente invention montrant la position du joint dans le cas de dispersions maximales entre planche de bord et pare-brise,
- La figure 4 est une coupe transversale du joint de planche de bord dans une première forme de réalisation selon la présente invention montrant la position du joint dans le cas de dispersions minimales entre planche de bord et pare-brise,
- La figure 5 est une coupe transversale du joint de planche de bord dans une seconde forme de réalisation selon la présente invention.

La figure 1 a déjà été détaillée dans la partie introductive de la description de la présente demande.

Les figures 2, 3 et 4 montrent une coupe transversale du joint de planche de bord avec les caractéristiques de la présente invention dans différentes conditions de travail.

Le joint selon la présente invention comporte à l'extrémité libre de la mâchoire inférieure de la pince 5 une surface d'appui 9 pour l'extrémité de la planche de bord 3 introduite dans la cavité de la pince 5. A cette figure, l'extrémité de la planche de bord 3 concernée est en forme de bras 3b qui comporte un renflement à son extrémité libre, ce renflement pénétrant dans la cavité de la pince 5 ainsi qu'une moindre partie du reste du bras 3b de la planche 3.

Si l'on se reporte à la figure 1 où il n'existe qu'une faible partie de contact, le risque de rotation du joint par rapport à la planche de bord est grand. Grâce à la surface d'appui 9, conformément à la présente invention, qui s'étend en section transversale sensiblement parallèlement à l'axe du bras 3b et qui est en contact avec le bras 3b sur une grande partie de sa longueur, un meilleur contact pince 5 et bras 3b de planche de bord 3 est obtenu et en conséquence une solidarisation du joint avec la planche de bord 3. Aux figures 2 à 4, la pince 5 conserve donc en section transversale une forme en C avec une base allongée formée par la surface d'appui 9.

Ensuite, le joint selon la présente invention comporte une lèvre inférieure 4 avec une diminution d'épaisseur 7 à sa partie supérieure reliée à la pince 5. Avec la disposition selon la figure 1, quand la lèvre inférieure 4 appuyait sur la partie correspondante du tablier 2a, une force s'exerçait sur la pince 5 du fait de la relative rigidité de la lèvre inférieure 4.

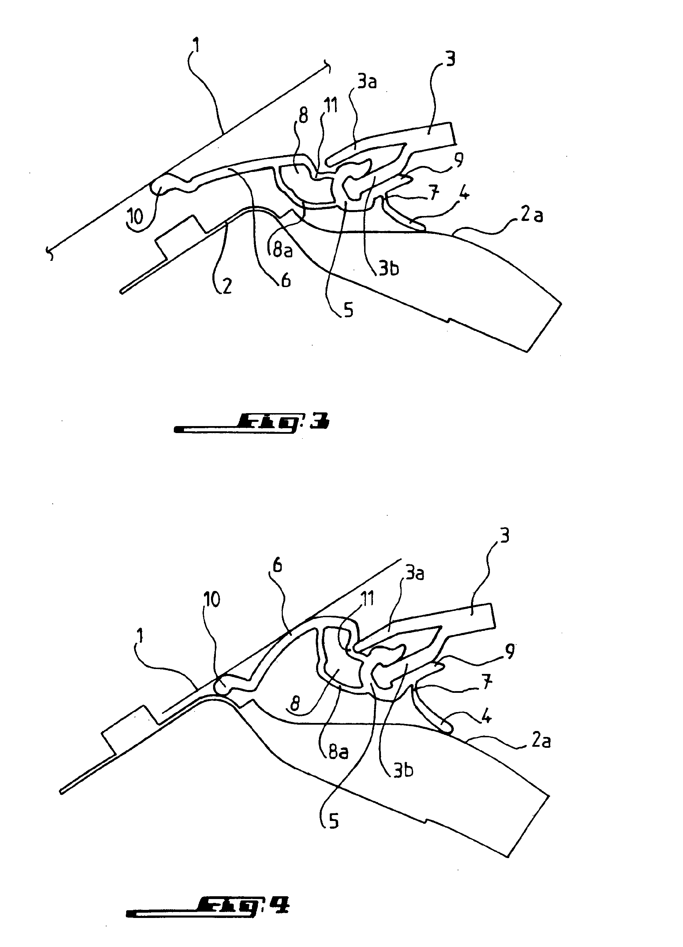

En effet, comme il sera mieux vu aux figures 3 et 4, quand le joint est monté entre le tablier 2 et le pare-brise 1, la lèvre inférieure 4 rentre en contact avec la partie correspondante 2a du tablier et ne peut plus suivre le mouvement d'avancement du joint vers le pare-brise 1: il s'ensuit que selon la rigidité de la lèvre inférieure 4 un effort plus ou moins grand peut être transmis sur la pince 5, effort qui tend à ouvrir cette pince 5.

Avec une telle diminution d'épaisseur 7, la lèvre inférieure 4 présente plus d'élasticité par rapport à la pince 5 et les efforts s'exerçant sur l'extrémité libre de la lèvre inférieure 4 en contact avec la partie correspondante du tablier 2a ne sont plus directement transmis à la pince 5, d'où un risque moindre de déformation de celle-ci et notamment de l'extrémité inférieure de sa cavité de réception pour l'extrémité de la planche de bord qui avait tendance à s'ouvrir quand soumise à de tels efforts.

De préférence, la lèvre inférieure 4 est reliée à la pince 5 au niveau de sa mâchoire inférieure et avantageusement au niveau de la surface d'appui 9 en étant plus proche de l'extrémité de cette surface d'appui 9 reliée à la mâchoire inférieure 4 que de l'extrémité libre de cette surface d'appui 9 afin de ne pas exercer d'effort d'éloignement de cette surface d'appui 9 par rapport au bras 3b de la planche de bord 3.

De plus, le joint selon l'invention présente une poche 8 s'étendant fermée en section transversale sous la lèvre supérieure 6, cette poche étant limitée d'un côté par ladite lèvre supérieure 6 et de l'autre par la pince 5. Cette poche 8 fermée permet de créer une zone d'absorption des dispersions exercées sur le joint. Un bras de liaison 8a est fixé d'un côté sur la pince 5 et de l'autre sur la partie inférieure de la lèvre supérieure 6, ce bras de liaison 8a s'étendant en dessous de la lèvre supérieure 6. Ce bras de liaison 8a peut ainsi compléter une partie inférieure de la lèvre supérieure 6 de même qu'une partie externe du C de la pince 5 pour former le pourtour de la poche 8. Cette poche 8 peut aussi coopérer avec une forme spécifique de la planche de bord 3 comme on le verra par la suite.

En ce qui concerne les compositions des divers éléments du joint de la planche de bord, la lèvre supérieure 6 et la pince 5 sont avantageusement réalisées en matériau plastique rigide, par exemple en polypropylène car ne nécessitant pas d'être réalisées en matériau souple mais nécessitant au contraire un matériau résistant. Par contre, préférentiellement, la lèvre inférieure 4 est composée d'un matériau thermoplastique élastomère, par exemple d'éthylène propylène diène monomère (EPDM).

Dans un premier exemple, la pince et la surface d'appui peuvent être réalisées en EPDM de dureté Shore 90A et les lèvres ainsi que les parois de la poche 8 en EPDM de dureté shore 90A.

Dans un second exemple, la pince et la surface d'appui peuvent être réalisées en polypropylène et les lèvres ainsi que la paroi de la poche dans un mélange de polypropylène/EPDM.

Un mode de réalisation d'une coopération joint avec une planche de bord spécifique est aussi montré aux figures 2 à 4.

Sur ces figures, la planche de bord 3 présente une extrémité tournée vers le joint sous forme de fourche. Le bras inférieur 3b de cette fourche de la planche de bord est en contact avec l'élément d'appui 9 de la mâchoire inférieure puis pénètre dans la pince 5 par son extrémité présentant une forme arrondie. Quant au bras supérieur 3a, il s'étend au dessus de la pince 5 et peut, dans le cas où la lèvre supérieure 6 est poussée vers l'arrière du fait du contact avec le pare-brise 1 et le tablier 2 notamment dans le cas de dispersions minimales entre la planche 3 et le pare-brise 1 conformément à la figure 4, entrer en contact avec le côté supérieur de la lèvre supérieure 6. Dans ce cas, il peut servir de butée à une partie de ce côté supérieur de la lèvre supérieure 6 et amener partiellement cette lèvre supérieure 6 à se plaquer contre le pare-brise 1. Le bras de soutien 8a remplit alors son rôle de même que la poche 8 par déformation de celle-ci pour appliquer une partie de la lèvre supérieure 6 contre le pare-brise 1. Avantageusement, le côté supérieur de la lèvre supérieure 6 peut présenter un creux 11 à l'endroit avec lequel l'extrémité du bras supérieur 3a de la fourche de la planche de bord 3 est destinée à rentrer en contact.

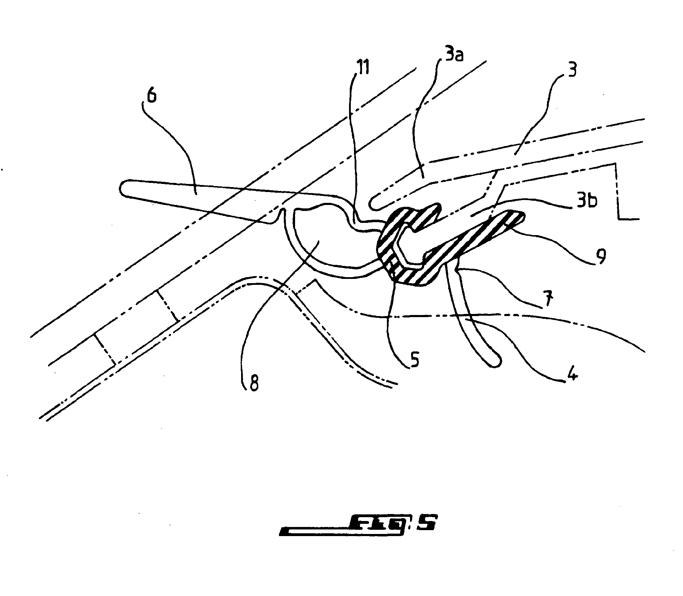

La figure 5 montre une coupe transversale du joint de planche de bord dans une seconde forme de réalisation selon la présente invention. Ce joint diffère essentiellement du joint selon la première forme de réalisation de l'invention par une lèvre supérieure 6 plus épaisse, dont l'épaisseur décroît régulièrement jusqu'à son extrémité libre et une surface d'appui 9 pour le bras 3b de la fourche plus longue. De même la pince 5 présente un profil intérieur laissant un certain jeu au renflement disposé à l'extrémité du bras 3b de la planche de bord 3. Ce renflement peut avoir une structure polygonale plus accentuée ou une forme moins arrondie que dans la première forme de réalisation. De même la diminution d'épaisseur 7 est moins marquée que dans la première forme de réalisation et peut consister en une simple encoche faite sur la partie supérieure d'un côté de la lèvre inférieure 4, de préférence sur le côté de cette lèvre ne faisant pas face au tablier 2a.

Cette forme de réalisation est considérée comme une forme préférentielle de réalisation de l'invention.

On voit ainsi que l'invention concerne aussi une coopération entre joint de planche de bord et planche de bord elle-même et que celle-ci n'est pas seulement limitée à un joint mais aussi à un véhicule présentant entre autres un tel joint en association avec une planche de bord et ses caractéristiques spécifiques de même qu'avec un tablier et un pare-brise.

Les avantages obtenus par un tel joint de planche de bord sont nombreux. On pourra citer entre autres une étanchéité assurée entre la planche de bord et le pare-brise, moins de fuite acoustique venant notamment du moteur à travers le tablier d'insonorisation, la possibilité de se passer de joint de mousse supplémentaire rapporté sur le pare-brise entre la lèvre supérieure du joint et le pare-brise, la possibilité de ne plus avoir à utiliser de matériel préalablement au montage du joint et enfin la possibilité de ne plus effectuer de traitement de correction du positionnement du joint après montage, comme par exemple de passer une raclette en ligne de montage pour corriger un arc-boutement local du joint. Cela représente donc un gain de fabrication important.

En plus du gain acoustique notoire et du gain visuel sur la qualité du joint, un tel joint peut être adapté à différents types de véhicule sans adaptation spécifique nécessaire. Il existe aussi la possibilité de remplacer facilement les joints de planche de bord déjà existants sur des véhicules déjà produits par les joints selon la présente invention.

## Revendications

1. Véhicule comprenant un habitacle interne, un compartiment moteur, une planche de bord, un pare-brise, un tablier d'insonorisation du compartiment moteur s'étendant entre le compartiment moteur et l'habitacle du véhicule et un joint de planche de bord disposé entre le pare-brise (1), le tablier (2) et la planche (3) de bord dans l'habitacle du véhicule, ce joint s'étendant sensiblement dans la direction latérale du véhicule et comprenant une pince (5) avec une mâchoire supérieure et une mâchoire inférieure présentant une cavité entre elles recevant une extrémité (3b) de la planche (3) de bord, une lèvre supérieure (6) s'étendant en section transversale entre une de ses extrémités reliée à ladite pince (5) et son autre extrémité libre s'appliquant contre le bord inférieur du pare-brise (1) en position montée du joint et une lèvre inférieure (4) s'étendant en section transversale entre une de ses extrémités reliée à ladite pince (5) et son autre extrémité libre s'appliquant contre le tablier (2) en position montée du joint, ledit joint de planche (3) de bord étant **caractérisé en ce que** la lèvre supérieure (6) présente une poche (8) fermée s'étendant en section transversale sous celle-ci, limitée par ladite lèvre supérieure (6), par la pince (5) et à sa partie inférieure par un bras de liaison (8a) fixé d'une part à la lèvre supérieure (6) et de l'autre à la pince (5), **en ce que** la mâchoire inférieure de la pince (5) comporte à son extrémité libre une surface d'appui (9) définissant une base allongée s'étendant sensiblement parallèlement à l'axe de l'extrémité (3b) de la planche (3) de bord et qui vient en contact avec ladite extrémité (3b) sur une grande partie de sa longueur, et **en ce que** l'extrémité de la planche de bord faisant face à la pince est sous forme de fourche avec un bras supérieur libre (3a) et un bras inférieur (3b) portant la surface d'appui (9) de la pince (5), l'extrémité de ce bras inférieur (3b) étant logée dans la pince (5) entre les mâchoires supérieure et inférieure.

2. Véhicule selon la revendication 1, **caractérisé en ce que** la lèvre inférieure (4) présente une diminution d'épaisseur (7) à sa partie supérieure reliée à la pince (5).

3. Véhicule selon l'une quelconque des revendications précédentes, **caractérisé en ce que** la lèvre supérieure (6) et la pince (5) sont réalisées en matériau plastique rigide, par exemple en polypropylène et la lèvre inférieure (4) est composée d'un matériau thermoplastique élastomère, par exemple d'éthylène propylène diène monomère.

4. Véhicule selon l'une quelconque des revendications précédentes, **caractérisé en ce que** la diminution d'épaisseur (7) de la lèvre inférieure (4) se trouve à la liaison de cette lèvre inférieure (4) avec la pince (5).

5. Véhicule selon la revendication 4, **caractérisé en ce que** la lèvre inférieure (4) est reliée avec la mâchoire inférieure de la pince (5), de préférence au début de la surface d'appui (9) présentée par cette mâchoire inférieure.

6. Véhicule selon l'une quelconque des revendications précédentes, **caractérisé en ce que** le côté supérieur de la lèvre supérieure (6) comprend un sillon (11) destiné à loger en certaines conditions d'opération un élément apte à servir de butée et à maintenir ainsi une partie de la lèvre supérieure (6) en contact avec le pare-brise (1).

7. Véhicule selon l'une des revendications précédentes, **caractérisé en ce qu'**en position montée du joint et sous certaines conditions d'opération, le bras supérieur (3a) de la fourche de la planche (3) de bord peut venir en appui sur une partie, de préférence en forme de sillon (11) du côté supérieur de la lèvre supérieure (6), sensiblement au dessus du milieu de la poche (8).

## Patentansprüche

1. Fahrzeug, das einen Fahrgastinnenraum, einen Motorraum, ein Armaturenbrett, eine Windschutzscheibe, eine Geräuschdämmschürze des Motorraums, die sich zwischen dem Motorraum und dem Fahrgastraum des Fahrzeugs erstreckt, und eine Armaturenbrettabdichtung, die zwischen der Windschutzscheibe (1), der Schürze (2) und dem Armaturenbrett (3) im Fahrgastraum des Fahrzeugs angeordnet ist, wobei sich diese Abdichtung etwa in der Seitenrichtung des Fahrzeugs erstreckt und eine Zange (5) mit einer oberen Backe und einer unteren Backe umfasst, die einen Hohlraum zwischen sich aufweisen, der ein Ende (3b) des Armaturenbretts (3) aufnimmt, wobei sich eine obere Lippe (6) im Querschnitt zwischen einem ihrer Enden, das mit der Zange (5) verbunden ist, und ihrem anderen freien Ende, das in montierter Position der Abdichtung am unteren Rand der Windschutzscheibe (1) anliegt, erstreckt, und sich eine untere Lippe (4) im Querschnitt zwischen einem ihrer Enden, das mit der Zange (5) verbunden ist, und ihrem anderen freien Ende, das in montierter Position der Abdichtung an der Schürze (2) anliegt, erstreckt, wobei die Abdichtung des Armaturenbretts (3) **dadurch gekennzeichnet ist, dass** die obere Lippe (6) eine geschlossene Tasche (8) aufweist, die sich im Querschnitt unter derselben erstreckt, begrenzt durch die obere Lippe (6), durch die Zange (5), und in ihrem unteren Teil durch einen Verbindungsarm (8a), der auf der einen Seite an der oberen Lippe (6) und an der anderen an der Zange (5) befestigt ist, und dass die untere Backe der Zange (5) an ihrem freien Ende eine Stützfläche (9) aufweist, die eine längliche Basis definiert, die sich etwa parallel zur Achse des Endes (3b) des Armaturenbretts (3) erstreckt und die mit dem Ende (3b) über einen großen Teil ihrer Länge in Kontakt kommt, und dass das Ende des Armaturenbretts, das der Zange gegenüberliegt, in Gabelform ist mit einem freien oberen Arm (3a) und einem unteren Arm (3b), der die Stützfläche (9) der Zange (5) trägt, wobei das Ende dieses unteren Arms (3b) in der Zange (5) zwischen der oberen und unteren Backe untergebracht ist.

2. Fahrzeug nach Anspruch 1, **dadurch gekennzeichnet, dass** die untere Lippe (4) in ihrem oberen Teil, der mit der Zange (5) verbunden ist, eine Dickenverringerung (7) aufweist.

3. Fahrzeug nach einem der vorangehenden Ansprüche, **dadurch gekennzeichnet, dass** die obere Lippe (6) und die Zange (5) aus starrem Kunststoff, beispielsweise aus Polypropylen, hergestellt sind, und die untere Lippe (4) aus einem thermoplastischen Elastomermaterial, beispielsweise aus Ethylenpropylendienmonomer, zusammengesetzt ist.

4. Fahrzeug nach einem der vorangehenden Ansprüche, **dadurch gekennzeichnet, dass** sich die Dickenverringerung (7) der untere Lippe (4) an der Verbindung dieser unteren Lippe (4) mit der Zange (5) befindet.

5. Fahrzeug nach Anspruch 4, **dadurch gekennzeichnet, dass** die untere Lippe (4) mit der unteren Backe der Zange (5), vorzugsweise am Beginn der Stützfläche (9), die diese untere Backe darstellt, verbunden ist.

6. Fahrzeug nach einem der vorangehenden Ansprüche, **dadurch gekennzeichnet, dass** die obere Seite der oberen Lippe (6) eine Furche (11) umfasst, die unter bestimmten Operationsbedingungen zur Aufnahme eines Elements bestimmt ist, das imstande ist, als Anschlag zu dienen und somit einen Teil der oberen Lippe (6) im Kontakt mit der Windschutzscheibe (1) zu halten.

7. Fahrzeug einem der vorangehenden Ansprüche, **dadurch gekennzeichnet, dass** sich der obere Arm (3a) der Gabel des Armaturenbretts (3) in montierter Position der Abdichtung und unter bestimmten Operationsbedingungen auf einem Teil, vorzugsweise in Form einer Furche (11) auf der oberen Seite der oberen Lippe (6), etwa über der Mitte der Tasche (8), abstützen kann.

## Claims

1. Vehicle, comprising an internal passenger compartment, an engine compartment, a dashboard, a windscreen, a panel for acoustic insulation of the engine compartment extending between the engine compartment and the passenger compartment of the vehicle, and a dashboard joint disposed between the windscreen (1), the panel (2) and the dashboard (3) in the passenger compartment of the vehicle, this joint extending substantially in the lateral direction of the vehicle and comprising a clamp (5) with a top jaw and a bottom jaw having a cavity between them receiving one end (3b) of the dashboard (3), a top lip (6) lying in cross section between one of its ends connected to said clamp (5) and its other free end applied against the bottom edge of the windscreen (1) in the mounted position of the joint, and a bottom lip (4) extending in cross section between one of its ends connected to said clamp (5) and its other free end applied against the panel (2) in the mounted position of the joint, said joint for the dashboard (3) being **characterised in that** the top lip (6) has a closed pocket (8) extending in cross section thereunder, delimited by said top lip (6), by the clamp (5) and at its bottom part by a connecting arm (8a) fixed firstly to the top lip (6) and secondly to the clamp (5), **in that** the bottom jaw of the clamp (5) comprises at its free end an abutment surface (9) defining an elongate base extending substantially parallel to the axis of the end (3b) of the dashboard (3) and which comes into contact with said end (3b) over a large part of its length, and **in that** the end of the dashboard facing the clamp is in the form of a fork with a free top arm (3a) and a bottom arm (3b) carrying the abutment surface (9) of the clamp (5), the end of this bottom arm (3b) being housed in the clamp (5) between the top and bottom jaws.

2. Vehicle according to claim 1, **characterised in that** the bottom lip (4) has reduction in thickness (7) at its top part connected to the clamp (5).

3. Vehicle according to any one of the preceding claims, **characterised in that** the top lip (6) and the clamp (5) are produced from rigid plastics material, for example polypropylene, and the bottom lip (4) is composed of an elastomeric thermoplastic material, for example ethylene propylene diene monomer.

4. Vehicle according to any one of the preceding claims, **characterised in that** the reduction in thickness (7) of the bottom lip (4) is situated at the connection of this bottom lip (4) to the clamp (5).

5. Vehicle according to claim 4, **characterised in that** the bottom lip (4) is connected to the bottom jaw of the clamp (5), preferably at the start of the abutment surface (9) presented by this bottom jaw.

6. Vehicle according to any one of the preceding claims, **characterised in that** the top side of the top lip (6) comprises a groove (11) intended to house, under certain operating conductions, an element able to serve as a stop and thus to hold part of the top lip (6) in contact with the windscreen (1).

7. Vehicle according to one of the preceding claims, **characterised in that**, in the mounted position of the joint and under certain operating conditions, the top arm (3a) of the fork of the dashboard (3) can come into abutment on a part, preferably in the form of a groove (11), of the top part of the top lip (6), substantially above the middle of the pocket (8).
